# EUROPÄISCHE PATENTSCHRIFT

(11) **EP 4 003 126 B1**
(45) Veröffentlichungstag und Bekanntmachung des Hinweises auf die Patenterteilung: **25.03.2026**
(21) Anmeldenummer: 20743996.9
(22) Anmeldetag: 16.07.2020
(51) Int. Cl.: A47L 15/42, A47L 15/22

(54) **HAUSHALTS-GESCHIRRSPÜLMASCHINE**
DOMESTIC DISHWASHER
LAVE-VAISSELLE DOMESTIQUE

(30) Priorität: 31.07.2019 DE 102019211410
(43) Veröffentlichungstag der Anmeldung: 01.06.2022
(73) Patentinhaber: BSH Hausgeräte GmbH, 81739 München (DE)
(72) Erfinder: LUGERT, Michael, 89343 Jettingen-Scheppach (DE); EISENBART, Bernd, 89438 Holzheim (DE); HEISELE, Bernd, 89567 Sontheim (DE); OBLINGER, Anton, 86637 Wertingen (DE); OBLINGER, Werner, 89426 Mödingen (DE)
(86) Internationale Anmeldenummer: PCT/EP2020/070101
(87) Internationale Veröffentlichungsnummer: WO 2021/018608

(56) Entgegenhaltungen:
- EP-A1- 1 090 579
- EP-A1- 2 233 057
- WO-A1-2013/132458
- CN-A- 105 286 747
- CN-A- 106 618 429
- CN-U- 204 445 754
- CN-U- 208 898 627
- US-A1- 2017 143 180

## Beschreibung

Die vorliegende Erfindung betrifft eine Haushalts-Geschirrspülmaschine.

Eine Geschirrspülmaschine umfasst einen Spülbehälter, in dem zu reinigendes Spülgut aufnehmbar ist. Zum Beaufschlagen des Spülguts mit Spülflotte und/oder Frischwasser kann innerhalb des Spülbehälters ein rotierender Sprüharm vorgesehen sein. Dieser Sprüharm kann entweder mit Hilfe des Drucks von aus Sprühdüsen des Sprüharms austretender Spülflotte und/oder Frischwasser oder mit Hilfe eines aktiven Antriebs, insbesondere mit Hilfe eines Elektromotors, angetrieben werden. Dabei kann der Antrieb so angeordnet werden, dass eine Drehachse desselben mit einer Drehachse des Sprüharms übereinstimmt.

Die EP 2 233 057 A1 beschreibt eine Geschirrspülmaschine, die mit einem Trocknungssystem ausgestattet ist, umfassend einen drehbaren Sprinkler, der an einem Waschbehälterboden angeordnet ist und ein Paar von schaufelförmigen Profilen aufweist, die entlang gegenüberliegender Seiten seiner beiden Arme angeordnet sind, sowie Antriebsmittel, die geeignet sind, den Sprinkler während eines Trocknungsschritts zu drehen, so dass dieser wie ein Ventilatorrotor wirkt, der einen vertikalen Luftstrom erzeugt, der die Trocknungsleistung der Geschirrspülmaschine verbessert.

Die US 2017/0143180 A1 zeigt eine Geschirrspülmaschine mit einem Motor, der eine Antriebswelle mit einem Pumpenwellenabschnitt, der sich von einer Seite aus erstreckt, und einem Sekundärwellenabschnitt, der sich von der anderen Seite aus erstreckt, aufweist.

Die WO 2013/132458 A1 beschreibt eine Waschvorrichtung für eine Wasch- und/oder Trockenmaschine.

Die EP 1 090 579 A1 zeigt eine drehbare Sprinkleranlage für eine Geschirrspülmaschine mit einem Sprinkler und einer Vorrichtung zum Verschieben des Sprinklers, die aus einer beweglichen Halterung für den Sprinkler und einer Antriebsvorrichtung für die bewegliche Halterung besteht.

Die CN 204445754 U beschreibt eine Sprüharmvorrichtung umfassend eine Sprüharmsitzbaugruppe, einen Motor, eine Getriebestruktur und einen Sprüharm, der auf der Sprüharmsitzbaugruppe montiert ist.

Die CN 105286747 A zeigt eine Sprüharmanordnung für eine Geschirrspülmaschine umfassend ein Bodengehäuse, einen Sprüharmsitz, einen Sprüharmkörper und einen Antrieb.

Die CN 106618429 A beschreibt einen Sprüharm mit einem Motor, der mit dem Sprüharm in einem kämmenden Modus direkt oder über einen Übertragungsmechanismus verbunden ist.

Vor diesem Hintergrund besteht eine Aufgabe der vorliegenden Erfindung darin, eine verbesserte Haushalts-Geschirrspülmaschine zur Verfügung zu stellen.

Demgemäß wird eine Haushalts-Geschirrspülmaschine mit einem Spülbehälter, einem Sprüharm zum Beaufschlagen von in dem Spülbehälter aufgenommenem Spülgut mit Spülflotte und/oder Frischwasser und einer Antriebseinrichtung zum aktiven Antreiben des Sprüharms vorgeschlagen. Dabei sind eine Drehachse einer Antriebswelle der Antriebseinrichtung und eine Drehachse des Sprüharms parallel zueinander und beabstandet voneinander angeordnet. Die Haushalts-Geschirrspülmaschine umfasst ferner einen Pumpentopf, an dem der Sprüharm gelagert ist und an dem die Antriebseinrichtung befestigt ist, wobei der Sprüharm eine Sprüharmverzahnung umfasst, in welche die Antriebseinrichtung zur Drehmomentübertragung formschlüssig eingreift, wobei der Pumpentopf einen rohrförmigen Pumpentopfdom umfasst, in oder an welchem der Sprüharm drehbar gelagert ist, und wobei der Pumpentopfdom einen radialen Durchbruch aufweist, durch welchen hindurch die Antriebseinrichtung zur Drehmomentübertragung formschlüssig in die Sprüharmverzahnung eingreift.

Dadurch, dass die Drehachse der Antriebswelle und die Drehachse des Sprüharms beabstandet voneinander angeordnet sind, kann ein Antriebselement der Antriebseinrichtung beabstandet von dem Sprüharm angeordnet werden. Hierdurch erfährt die von einer Umwälzpumpe der Haushalts-Geschirrspülmaschine zum Sprüharm strömende Spülflotte und/oder das Frischwasser keine Umlenkung, und der Sprüharm selbst kann abweichend von einem Direktantrieb frei von zum Antrieb nötigen Elementen gehalten werden. Dies ermöglicht einen einfachen Aufbau der Haushalts-Geschirrspülmaschine und bietet im Vergleich zu einem Direktantrieb des Sprüharms hydraulische Vorteile.

Der Spülbehälter ist vorzugweise quaderförmig. Insbesondere umfasst der Spülbehälter einen Boden, eine dem Boden gegenüberliegend angeordnete Decke, eine Tür, eine der geschlossenen Tür gegenüberliegend angeordnete Rückwand sowie zwei Seitenwände. In dem Spülbehälter können Spülgutaufnahmen zum Aufnehmen des Spülguts vorgesehen sein. Beispielsweise sind ein Oberkorb, ein Unterkorb und eine Besteckschublade vorgesehen. Unterhalb des Unterkorbs kann der Sprüharm angeordnet sein. Der Sprüharm kann insbesondere drehbar an dem Boden gelagert sein. Alternativ kann der Sprüharm auch zwischen dem Unterkorb und dem Oberkorb angeordnet sein.

Unter "Beaufschlagen" des Spülguts mit Spülflotte und/oder Frischwasser ist vorliegend zu verstehen, dass das Spülgut mit Hilfe des Sprüharms mit Spülflotte und/oder Frischwasser benetzt wird. Unter "Spülflotte" kann vorliegend mit einem Reinigungsmittel versetztes Wasser zu verstehen sein. Die Spülflotte kann von dem Spülgut abgelöste Verschmutzungen umfassen. Darunter, dass der Sprüharm "aktiv" angetrieben ist, ist vorliegend zu verstehen, dass die Antriebseinrichtung ein Drehmoment auf den Sprüharm aufbringt. Unter einem "aktiven" Antreiben ist daher vorliegend insbesondere nicht zu verstehen, dass der Sprüharm mit Hilfe von Sprühdüsen in Rotation versetzt wird. Zum aktiven Antreiben des Sprüharms umfasst die Antriebseinrichtung ein Antriebselement, insbesondere einen Elektromotor, der die Antriebswelle in Rotation versetzt. Darunter, dass die Drehachse des Sprüharms und die Drehachse der Antriebswelle "beabstandet voneinander" angeordnet sind, ist vorliegend zu verstehen, dass die beiden Drehachsen um einen Abstand voneinander entfernt angeordnet sind. Das heißt, die Drehachse der Antriebswelle und die Drehachse des Sprüharms stimmen insbesondere nicht miteinander überein.

Gemäß einer Ausführungsform umfasst der Sprüharm einen Ausleger, der mit Hilfe der Antriebseinrichtung aktiv angetrieben ist, und einen drehbar an dem Ausleger gelagerten Sprüharmsatelliten, der mit Hilfe der Spülflotte und/oder des Frischwassers rückstoßangetrieben ist.

Der Ausleger umfasst vorzugsweise ein konusförmiges Lagerrohr und beispielsweise zwei Arme. Das Lagerrohr und die Arme sind hohl, so dass Spülflotte und/oder Frischwasser von dem Lagerrohr in die Arme strömen kann. Die Arme können optional Sprühdüsen aufweisen. Die Arme können jedoch auch frei von Sprühdüsen sein. Der Sprüharmsatellit wird vorzugsweise nicht aktiv angetrieben, sondern wird mit Hilfe von aus an dem Sprüharmsatelliten vorgesehenen Sprühdüsen austretender Spülflotte und/oder Frischwasser in Rotation versetzt. "Rückstoßangetrieben" heißt vorliegend, dass die Spülflotte und/oder das Frischwasser aus den Sprühdüsen des Sprüharmsatelliten austritt, wodurch dieser in Rotation versetzt wird. Es können auch spezielle Antriebssprühdüsen vorgesehen sein. Der Sprüharmsatellit kann mehrere Arme aufweisen. Vorzugsweise umfasst der Sprüharmsatellit drei Arme, die um 120° zueinander versetzt angeordnet sind. Der Sprüharmsatellit kann allerdings auch nur zwei Arme umfassen.

Gemäß einer weiteren Ausführungsform umfasst die Antriebseinrichtung eine Getriebebox zur Drehmomentübertragung von der Antriebswelle auf den Sprüharm.

Vorzugsweise ist die Getriebebox ein vormontiertes Modul, das zur Kopplung der Antriebswelle mit dem Sprüharm einfach montiert werden kann. Die Getriebebox kann als Getriebemodul oder als Getriebeeinheit bezeichnet werden.

Gemäß einer weiteren Ausführungsform umfasst die Getriebebox geradverzahnte oder schrägverzahnte Zahnräder, ein Kegelradgetriebe, einen Riementrieb oder einen Kettentrieb.

Grundsätzlich kann die Getriebebox jede mögliche Art der Drehmomentübertragung umfassen, die geeignet ist, den Abstand zwischen der Drehachse der Antriebswelle der Antriebseinrichtung und der Drehachse des Sprüharms zu überbrücken.

Gemäß einer weiteren Ausführungsform umfasst die Getriebebox mehrere Zahnräder, welche einen Abstand zwischen der Antriebswelle und dem Sprüharm überbrücken.

Insbesondere wird der Abstand zwischen der Drehachse der Antriebswelle und der Drehachse des Sprüharms gemessen. Die Anzahl der Zahnräder ist grundsätzlich beliebig. Vorzugsweise weist die Getriebebox eine Übersetzung von etwa 1 auf. Beispielsweise können drei Zahnräder vorgesehen sein. Es können jedoch auch nur ein Zahnrad, zwei Zahnräder, vier Zahnräder oder mehr als vier Zahnräder vorgesehen sein.

Gemäß einer weiteren Ausführungsform umfasst die Getriebebox ein Getriebegehäuse, in welchem die Zahnräder aufgenommen sind.

Vorzugsweise ist das Getriebegehäuse aus Kunststoffspritzgussbauteilen aufgebaut. Das Getriebegehäuse kann Befestigungsösen aufweisen, mit deren Hilfe das Getriebegehäuse mit einem Pumpentopf der Haushalts-Geschirrspülmaschine verbunden werden kann.

Gemäß einer weiteren Ausführungsform sind die Zahnräder drehbar in dem Getriebegehäuse gelagert.

Hierzu sind vorzugsweise Achsen in dem Getriebegehäuse vorgesehen. Die Achsen können beispielsweise zylinderförmige Bolzen oder Stifte sein, die in dem Getriebegehäuse aufgenommen sind.

Gemäß einer weiteren Ausführungsform umfasst das Getriebegehäuse ein Gehäuseoberteil und ein Gehäuseunterteil, wobei das Gehäuseoberteil formschlüssig mit dem Gehäuseunterteil verbunden ist.

Vorzugsweise sind das Gehäuseoberteil und das Gehäuseunterteil Kunststoffspritzgussbauteile. Eine formschlüssige Verbindung entsteht durch das Ineinander- oder Hintergreifen von mindestens zwei Verbindungspartnern, im vorliegenden Fall dem Gehäuseoberteil und dem Gehäuseunterteil. Beispielsweise können an dem Gehäuseoberteil Schnapphaken vorgesehen sein, die geeignet sind, in entsprechende Aufnahmen des Gehäuseunterteils einzuschnappen und so das Gehäuseoberteil und das Gehäuseunterteil formschlüssig miteinander zu verbinden. Das Getriebegehäuse kann hierdurch auch einfach wieder demontiert werden.

Gemäß einer weiteren Ausführungsform ist das Getriebegehäuse fluiddurchlässig.

"Fluiddurchlässig" heißt vorliegend, dass ein Fluid, insbesondere Spülflotte und/oder Frischwasser, durch das Getriebegehäuse hindurchströmen kann. Hierdurch kann eine Verschmutzung der Zahnräder verhindert werden, da die hindurchströmende Spülflotte und/oder das Frischwasser Verschmutzungen aus dem Getriebegehäuse ausspülen können. Das Getriebegehäuse weist hierzu bevorzugt geeignete Auslassöffnungen auf, durch die die Spülflotte und/oder das Frischwasser aus dem Getriebegehäuse austreten kann.

Gemäß einer weiteren Ausführungsform umfasst die Haushalts-Geschirrspülmaschine ferner ein Siebsystem, unter welchem die Getriebebox angeordnet ist.

Hierdurch ist die Getriebebox zumindest vor Grobschmutz geschützt. Dies verhindert eine Verunreinigung der Getriebebox beziehungsweise der Zahnräder. Vorzugsweise ist die Getriebebox zwischen dem Pumpentopf und dem Siebsystem angeordnet. Das Siebsystem kann mehrteilig sein und beispielsweise ein Feinsieb sowie ein Grobsieb umfassen.

Die Haushalts-Geschirrspülmaschine umfasst einen Pumpentopf, an dem der Sprüharm gelagert ist und an dem die Antriebseinrichtung befestigt ist.

Insbesondere ist der Sprüharm drehbar an dem Pumpentopf gelagert. Die Antriebseinrichtung kann beispielsweise mit Hilfe der an dem Getriebegehäuse vorgesehenen Befestigungsösen mit dem Pumpentopf verschraubt werden. Hierzu kann der Pumpentopf geeignete Aufnahmeabschnitte zum Aufnehmen von Schrauben umfassen. Der Pumpentopf ist vorzugsweise ein Kunststoffspritzgussbauteil.

Der Sprüharm umfasst eine Sprüharmverzahnung, in welche die Antriebseinrichtung zur Drehmomentübertragung formschlüssig eingreift.

Vorzugsweise ist die Sprüharmverzahnung an dem Lagerrohr vorgesehen. Insbesondere ist die Sprüharmverzahnung außenseitig an dem Lagerrohr positioniert. Die Sprüharmverzahnung kann beispielsweise eine Geradverzahnung oder eine Schrägverzahnung sein. Die Sprüharmverzahnung umfasst bevorzugt eine Vielzahl an Zähnen, die gleichmäßig, insbesondere außenseitig, um einen Umfang des Lagerrohrs verteilt angeordnet sind. Die Sprüharmverzahnung ist vorzugsweise einteilig, insbesondere materialeinstückig, mit dem Lagerrohr, ausgebildet. Unter "einteilig" ist vorliegend zu verstehen, dass das Lagerrohr und die Sprüharmverzahnung ein gemeinsames Bauteil bilden und nicht aus unterschiedlichen Bauteilen zusammengesetzt sind. "Materialeinstückig" bedeutet vorliegend, dass die Sprüharmverzahnung und das Lagerrohr durchgehend aus demselben Material gefertigt sind. Die Arme des Auslegers sind beispielsweise aus, insbesondere glasfaserverstärktem, Polypropylen (PP) gefertigt. Das Lagerrohr hingegen kann aus Polyoxymethylen (POM) gefertigt sein. Dementsprechend kann das Lagerrohr auch als POM-Lagerrohr oder POM-Lagerteil bezeichnet werden. Das heißt, das Lagerrohr und die Arme können aus unterschiedlichen Kunststoffmaterialien gefertigt sein. Beispielsweise können die Arme und das Lagerrohr in einem Kunststoffspritzgussprozess mit Hilfe eines Umspritzens der verschiedenen Kunststoffmaterialien fest miteinander verbunden werden.

Der Pumpentopf umfasst einen rohrförmigen Pumpentopfdom, in oder an welchem der Sprüharm drehbar gelagert ist, wobei der Pumpentopfdom einen radialen Durchbruch aufweist, durch welchen hindurch die Antriebseinrichtung zur Drehmomentübertragung formschlüssig in die Sprüharmverzahnung eingreift.

Der Pumpentopf umfasst vorzugsweise einen plattenförmigen Basisabschnitt, an dem die Getriebebox befestigt ist. Aus dem plattenförmigen Basisabschnitt erstreckt sich einteilig, insbesondere materialeinstückig, der Pumpentopfdom heraus. Der Pumpentopfdom ist rohrförmig, wobei der Durchbruch eine Wandung des Pumpentopfdoms in einer Radialrichtung des Pumpentopfdoms durchbricht, so dass ein Zahnrad der Getriebebox in die Sprüharmverzahnung eingreifen kann. Das heißt, das Zahnrad der Getriebebox ist durch den Durchbruch hindurchgeführt, so dass dieses in die Sprüharmverzahnung formschlüssig eingreift.

Gemäß einer weiteren Ausführungsform umfasst der Sprüharm zumindest eine Reinigungsdüse zum Reinigen der Antriebseinrichtung, wobei die Reinigungsdüse durch die Sprüharmverzahnung hindurchgeführt ist.

Vorzugsweise umfasst die Sprüharmverzahnung - wie zuvor erwähnt - eine Vielzahl an Zähnen, wobei jeder Zahn eine derartige Reinigungsdüse aufweisen kann. Es können jedoch auch nur ausgewählte Zähne der Sprüharmverzahnung eine derartige Reinigungsdüse aufweisen. Beispielsweise ist die Reinigungsdüse als durch den jeweiligen Zahn der Sprüharmverzahnung hindurchführende Bohrung ausgeführt. Mit Hilfe der Reinigungsdüse kann Spülflotte und/oder Frischwasser in die Getriebebox, insbesondere in das Getriebegehäuse der Getriebebox, eingedüst werden, wodurch die Zahnräder der Getriebebox von Verschmutzungen gereinigt werden können. Verschmutzungen können somit aus der Getriebebox herausgespült werden.

Gemäß einer weiteren Ausführungsform ist die Reinigungsdüse senkrecht zu der Drehachse des Sprüharms orientiert.

Alternativ kann die Reinigungsdüse auch schräg zu der Drehachse des Sprüharms orientiert sein. Für den Fall, dass mehrere Reinigungsdüsen vorgesehen sind, können diese unterschiedlich zu der Drehachse des Sprüharms orientiert sein.

Weitere mögliche Implementierungen der Haushalts-Geschirrspülmaschine umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Haushalts-Geschirrspülmaschine hinzufügen.

Weitere vorteilhafte Ausgestaltungen und Aspekte der Haushalts-Geschirrspülmaschine sind Gegenstand der Unteransprüche sowie der im Folgenden beschriebenen Ausführungsbeispiele der Haushalts-Geschirrspülmaschine. Im Weiteren wird die Haushalts-Geschirrspülmaschine anhand von bevorzugten Ausführungsformen unter Bezugnahme auf die beigelegten Figuren näher erläutert.
Fig. 1 zeigt eine schematische perspektivische Ansicht einer Ausführungsform einer Haushalts-Geschirrspülmaschine;
Fig. 2 zeigt eine schematische Schnittansicht einer Ausführungsform einer Sprühvorrichtung für die Haushalts-Geschirrspülmaschine gemäß Fig. 1;
Fig. 3 zeigt eine schematische Schnittansicht einer Ausführungsform einer Getriebebox für die Sprühvorrichtung gemäß Fig. 2; und
Fig. 4 zeigt eine schematische Aufsicht der Getriebebox gemäß Fig. 3.

In den Figuren sind gleiche oder funktionsgleiche Elemente mit denselben Bezugszeichen versehen worden, sofern nichts anderes angegeben ist.

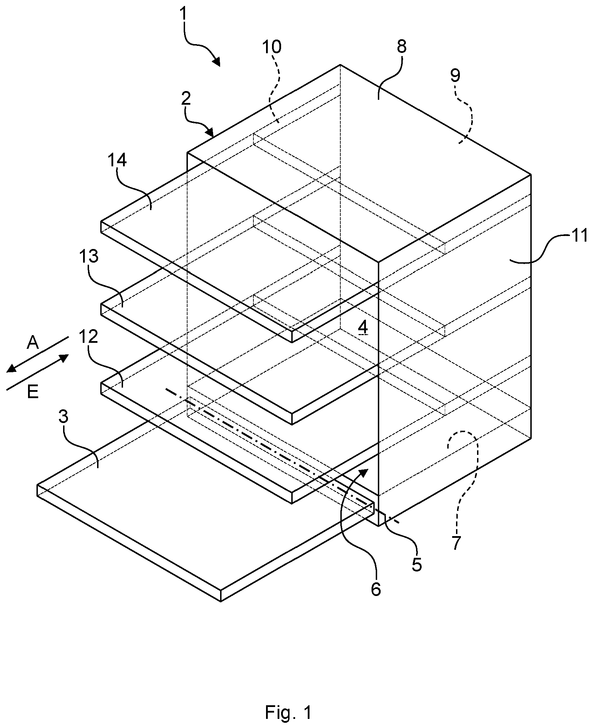

Die Fig. 1 zeigt eine schematische perspektivische Ansicht einer Ausführungsform einer Haushalts-Geschirrspülmaschine 1. Die Haushalts-Geschirrspülmaschine 1 umfasst einen Spülbehälter 2, der durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugsweise quaderförmig. Der Spülbehälter 2 kann in einem Gehäuse der Haushalts-Geschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushalts-Geschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E in den Spülbehälter 2 hineinschiebbar oder hineinfahrbar und entgegen der Einschubrichtung E in einer Auszugsrichtung A aus dem Spülbehälter 2 herausziehbar oder herausfahrbar.

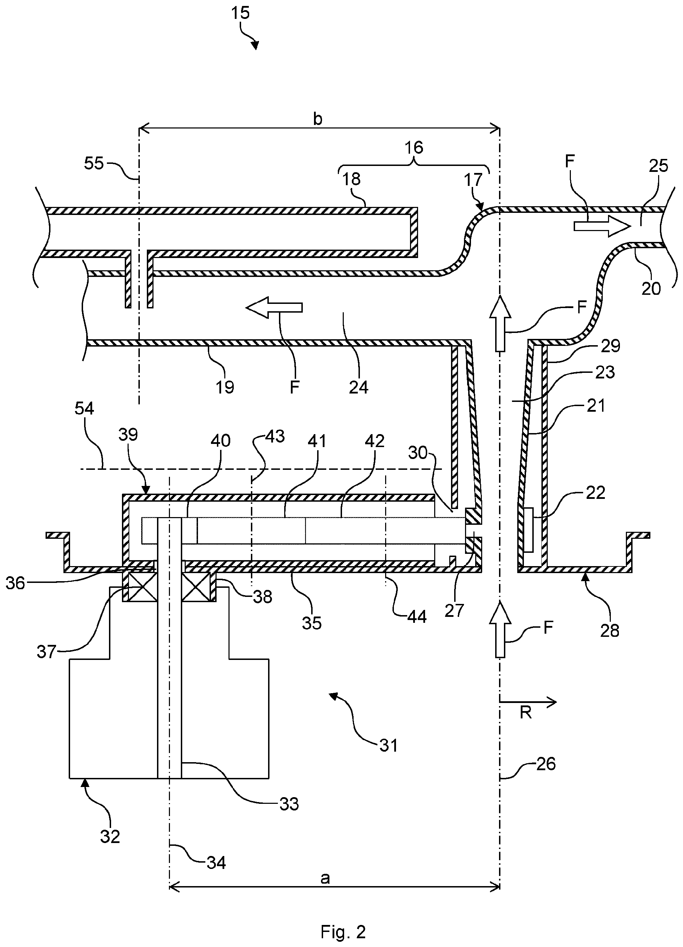

Die Fig. 2 zeigt eine schematische Schnittansicht einer Ausführungsform einer Sprühvorrichtung 15 für die Haushalts-Geschirrspülmaschine 1. Die Sprühvorrichtung 15 ist innerhalb des Spülbehälters 2 angeordnet. Insbesondere ist die Sprühvorrichtung 15 unterhalb der Spülgutaufnahme 12 positioniert. Die Sprühvorrichtung 15 kann an dem Boden 7 positioniert sein. Die Sprühvorrichtung 15 umfasst einen Sprüharm 16 zum Beaufschlagen von in dem Spülbehälter 2 aufgenommenem Spülgut (nicht gezeigt) mit Spülflotte und/oder Frischwasser F. Der Sprüharm 16 umfasst einen Ausleger 17, der aktiv angetrieben ist, sowie einen drehbar an dem Ausleger 17 gelagerten Sprüharmsatelliten 18. Der Sprüharmsatellit 18 kann mehrere Arme aufweisen. Beispielsweise kann der Sprüharmsatellit 18 drei Arme aufweisen, die in einem Winkel von 120° zueinander versetzt angeordnet sind. Der Ausleger 17 kann nicht gezeigte Sprühdüsen aufweisen.

Der Sprüharmsatellit 18 ist nicht aktiv angetrieben. Das heißt, der Sprüharmsatellit 18 weist keine eigene Antriebseinrichtung auf. Insbesondere ist der Sprüharmsatellit 18 mit Hilfe der Spülflotte und/oder des Frischwassers F rückstoßangetrieben. Unter "rückstoßangetrieben" ist vorliegend zu verstehen, dass der Sprüharmsatellit 18 mehrere nicht gezeigte Sprühdüsen aufweist, durch die die Spülflotte und/oder das Frischwasser F aus dem Sprüharmsatelliten 18 austreten kann und diesen in Rotation versetzt.

Der Ausleger 17 hingegen ist im Gegensatz zum Sprüharmsatelliten 18 aktiv angetrieben. Der Ausleger 17 umfasst einen ersten Arm 19, an dem der Sprüharmsatellit 18 drehbar gelagert ist, sowie einen zweiten Arm 20. Die Arme 19, 20 können nicht gezeigte Sprühdüsen aufweisen. Vorzugsweise sind zwei derartige Arme 19, 20 vorgesehen. Die Anzahl der Arme 19, 20 ist beliebig. Es kann auch genau ein Arm 19, 20 oder es können mehr als zwei Arme 19, 20 vorgesehen sein.

Sowohl der Sprüharmsatellit 18 als auch der Ausleger 17 sind hohl ausgebildet, so dass die Spülflotte und/oder das Frischwasser F durch den Ausleger 17 und den Sprüharmsatelliten 18 hindurchströmen kann. Die Arme 19, 20 des Auslegers 17 sind mit einem Venturirohr oder Lagerrohr 21 verbunden. Das Lagerrohr 21 ist ein Venturirohr oder kann als Venturirohr bezeichnet werden. Das Lagerrohr 21 kann auch als Lagerteil bezeichnet werden. Das Lagerrohr 21 ist geeignet, den Armen 19, 20 die Spülflotte und/oder das Frischwasser F zuzuführen. Das Lagerrohr 21 kann konusförmig ausgebildet sein. An dem Lagerrohr 21 ist eine Sprüharmverzahnung 22 mit einer Vielzahl an Zähnen vorgesehen. Die Arme 19, 20 sind beispielsweise aus, insbesondere glasfaserverstärktem, Polypropylen (PP) gefertigt. Das Lagerrohr 21 hingegen kann aus Polyoxymethylen (POM) gefertigt sein. Dementsprechend kann das Lagerrohr 21 auch als POM-Lagerrohr oder POM-Lagerteil bezeichnet werden. Das heißt, das Lagerrohr 21 und die Arme 19, 20 können aus unterschiedlichen Kunststoffmaterialien gefertigt sein. Beispielsweise können die Arme 19, 20 und das Lagerrohr 21 in einem Kunststoffspritzgussprozess mit Hilfe eines Umspritzens der verschiedenen Kunststoffmaterialien fest miteinander verbunden werden.

Die Arme 19, 20 können einteilig, insbesondere materialeinstückig, ausgebildet sein. "Einteilig" bedeutet dabei vorliegend, dass die Arme 19, 20 ein gemeinsames Bauteil bilden und nicht aus unterschiedlichen Bauteilen zusammengesetzt sind. "Materialeinstückig" bedeutet vorliegend, dass die Arme 19, 20 durchgehend aus demselben Material gefertigt sind. Dementsprechend können auch das Lagerrohr 21 und die Sprüharmverzahnung 22 einteilig, insbesondere materialeinstückig, ausgebildet sein.

Das Lagerrohr 21 umfasst innenseitig einen konusförmigen oder kegelstumpfförmigen Hohlraum 23, durch den die Spülflotte und/oder das Frischwasser F in Hohlräume 24, 25 der Arme 19, 20 einströmen kann. Dem Sprüharm 16, insbesondere dem Ausleger 17, ist eine Drehachse 26 zugeordnet, um welche der Sprüharm 16, insbesondere der Ausleger 17, drehbar ist.

Die Sprüharmverzahnung 22 kann eine optionale Reinigungsdüse 27 aufweisen. Die Reinigungsdüse 27 kann als durch einen Zahn der Sprüharmverzahnung 22 hindurchgehende Bohrung ausgebildet sein. Die Reinigungsdüse 27 kann jedoch auch zwischen zwei Zähnen der Sprüharmverzahnung 22 platziert sein. Insbesondere ist die Reinigungsdüse 27 senkrecht zu der Drehachse 26 orientiert. Jeder Zahn der Sprüharmverzahnung 22 kann eine derartige Reinigungsdüse 27 aufweisen. Alternativ können auch nur ausgewählten Zähnen der Sprüharmverzahnung 22 derartige Reinigungsdüsen 27 zugeordnet sein. Die Reinigungsdüse 27 muss nicht zwingend durch die Sprüharmverzahnung 22 hindurchlaufen. Die Reinigungsdüse 27 kann im Bereich der Sprüharmverzahnung 22 positioniert sein. Beispielsweise kann die Reinigungsdüse 27 in der Orientierung der Fig. 2 auch oberhalb oder unterhalb der Sprüharmverzahnung 22 platziert sein.

Die Sprühvorrichtung 15 umfasst weiterhin einen Pumpentopf 28. Der Pumpentopf 28 ist bevorzugt ein Kunststoffspritzgussbauteil. Der Pumpentopf 28 weist einen Pumpentopfdom 29 auf, der rohrförmig ist. Der Pumpentopfdom 29 erstreckt sich in Richtung der Decke 8. In dem Pumpentopfdom 29 ist das Lagerrohr 21 aufgenommen und drehbar gelagert. Die Art der Lagerung des Lagerrohrs 21 in dem Pumpentopfdom 29 ist allerdings in der Fig. 2 nicht dargestellt.

Der Pumpentopfdom 29 umfasst einen radialen Durchbruch 30. "Radial" ist dabei in Bezug auf eine Radialrichtung R des Pumpentopfdoms 29 zu verstehen. Die Radialrichtung R ist von der Drehachse 26 weg und senkrecht zu dieser orientiert. Der Durchbruch 30 durchbricht den Pumpentopfdom 29 somit in der Radialrichtung R. Durch den Durchbruch 30 hindurch kann formschlüssig in die Sprüharmverzahnung 22 eingegriffen werden, wie nachfolgend noch erläutert wird. Der Durchbruch 30 kann rechteckförmig sein.

Die Sprühvorrichtung 15 umfasst weiterhin eine Antriebseinrichtung 31 zum aktiven Antreiben des Sprüharms 16. Die Antriebseinrichtung 31 umfasst ein Antriebselement 32, insbesondere einen Elektromotor, mit einer Antriebswelle 33, die sich im Betrieb der Antriebseinrichtung 31 um eine Drehachse 34 dreht. "Aktiv angetrieben" bedeutet vorliegend somit, dass der Sprüharm 16 mit Hilfe des Antriebselements 32 und nicht etwa mit Hilfe von Sprühdüsen in Rotation versetzt wird. Die Drehachse 34 der Antriebswelle 33 und die Drehachse 26 des Sprüharms 16 sind parallel zueinander und um einen Abstand a voneinander beabstandet angeordnet.

Die Antriebswelle 33 ist durch eine in einem tellerförmigen Basisabschnitt 35 des Pumpentopfs 28 vorgesehene Bohrung 36 hindurchgeführt. Aus dem Basisabschnitt 35 heraus erstreckt sich auch der Pumpentopfdom 29. Die Antriebswelle 33 ist mit Hilfe eines Dichtelements 37, insbesondere mit Hilfe eines Wellendichtrings, fluiddicht gegenüber einem zylinderförmigen Aufnahmeabschnitt 38 des Pumpentopfs 28 abgedichtet.

Die Antriebseinrichtung 31 umfasst weiterhin eine Getriebebox 39 zur Drehmomentübertragung von der Antriebswelle 33 auf den Sprüharm 16, insbesondere auf die Sprüharmverzahnung 22 des Auslegers 17. Die Getriebebox 39 kann auch als Getriebemodul oder als Getriebeeinheit bezeichnet werden. Die Getriebebox 39 kann geradverzahnte oder schrägverzahnte Zahnräder 40 bis 42, ein Kegelradgetriebe, einen Riementrieb oder einen Kettentrieb umfassen. Die Zahnräder 40 bis 42 überbrücken den Abstand a zwischen der Antriebswelle 33, insbesondere der Drehachse 34, und dem Sprüharm 16, insbesondere der Drehachse 26. Die Anzahl der Zahnräder 40 bis 42 ist grundsätzlich beliebig.

Ein erstes Zahnrad 40 ist beispielsweise drehfest mit der Antriebswelle 33 gekoppelt. Die Antriebswelle 33 kann hierzu eine seitliche Abflachung oder Abfräsung aufweisen. Das erste Zahnrad 40 kann eine entsprechende Bohrung mit einer dazu korrespondierenden Geometrie aufweisen, so dass das erste Zahnrad 40 und die Antriebswelle 33 formschlüssig ineinandergreifen. Eine formschlüssige Verbindung entsteht durch das Ineinander- oder Hintergreifen von mindestens zwei Verbindungspartnern. Ein zweites Zahnrad 41 ist vorzugsweise drehbar in der Getriebebox 39 gelagert und dreht sich um eine Drehachse 43. Ein drittes Zahnrad 42 ist vorzugsweise ebenfalls drehbar in der Getriebebox 39 gelagert und dreht sich um eine Drehachse 44. Das dritte Zahnrad 42 steht im Eingriff mit der Sprüharmverzahnung 22, wobei das zweite Zahnrad 41 zwischen den Zahnrädern 40, 42 angeordnet ist. Die Drehachsen 26, 34, 43, 44 sind parallel zueinander und beabstandet voneinander angeordnet.

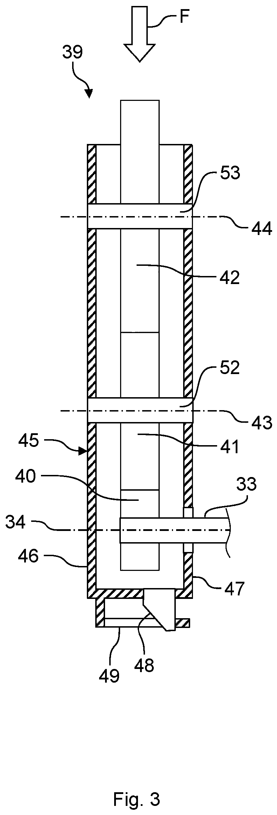

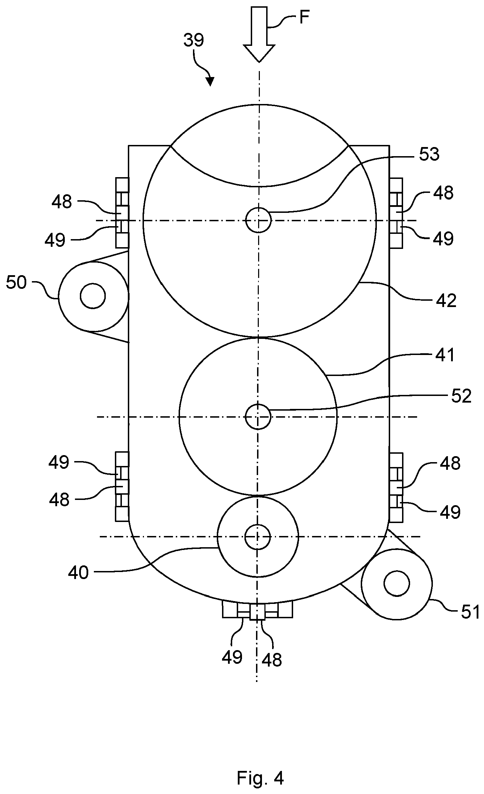

Die Fig. 3 zeigt eine schematische Schnittansicht einer Ausführungsform der Getriebebox 39. Die Fig. 4 zeigt eine schematische Aufsicht der Getriebebox 39. Nachfolgend wird auf die Fig. 3 und 4 gleichzeitig Bezug genommen.

Die Getriebebox 39 umfasst ein Getriebegehäuse 45, in welchem die Zahnräder 40 bis 42 aufgenommen sind. Insbesondere weist das Getriebegehäuse 45 ein Gehäuseoberteil 46 und ein Gehäuseunterteil 47 auf. Dabei ist das Gehäuseoberteil 46 formschlüssig mit dem Gehäuseunterteil 47 verbunden. Vorliegend können beispielsweise an dem Gehäuseunterteil 47 Schnapphaken 48 vorgesehen sein, die in entsprechende, an dem Gehäuseoberteil 46 vorgesehene, Aufnahmen 49 einrasten können. Die Aufnahmen 49 können beispielsweise als Durchbrüche vorgesehen sein.

Das Gehäuseunterteil 47 kann weiterhin Befestigungsösen 50, 51 aufweisen, mit deren Hilfe die Getriebebox 39 mit dem Pumpentopf 28 verschraubt werden kann. Das Getriebegehäuse 45 ist fluiddurchlässig. Das heißt, Spülflotte und/oder Frischwasser F kann durch das Getriebegehäuse 45 hindurchströmen. Mit Hilfe der Reinigungsdüse 27 kann insbesondere ein Sprühstrahl weg von der Drehachse 26 in das Getriebegehäuse 45 hinein erzeugt werden. Hierdurch kann die Getriebebox 39 von Verschmutzungen gereinigt und durchgespült werden. Das Getriebegehäuse 45 weist hierzu entsprechende Auslassöffnungen für die Spülflotte und/oder das Frischwasser F auf.

Wie zuvor erwähnt, sind die Zahnräder 40 bis 42 drehbar in der Getriebebox 39, insbesondere in dem Getriebegehäuse 45, gelagert. Hierzu können für die Zahnräder 41, 42 Achsen 52, 53 vorgesehen sein, die in dem Getriebegehäuse 45, insbesondere in dem Gehäuseoberteil 46 und in dem Gehäuseunterteil 47 gelagert sind. Das erste Zahnrad 40 ist auf der Antriebswelle 33 befestigt. Das erste Zahnrad 40 ist in dem Gehäuseoberteil 46 und in dem Gehäuseunterteil 47 gelagert. Die Achsen 52, 53 können beispielsweise zylinderförmige Bolzen oder Stifte sein.

Nun zurückkehrend zu der Fig. 2 ist dem Pumpentopf 28 ein Siebsystem 54 zugeordnet, unter welchem die Getriebebox 39 angeordnet ist. Das heißt, die Getriebebox 39 ist zwischen dem Basisabschnitt 35 des Pumpentopfs 28 und dem Siebsystem 54 positioniert. Hierdurch kann eine Verschmutzung der Getriebebox 39 verhindert werden. Das Siebsystem 54 kann mehrteilig sein und ein Feinsieb sowie ein Grobsieb umfassen.

Die Funktionalität der Sprühvorrichtung 15 wird nachfolgend erläutert. Im Betrieb der Haushalts-Geschirrspülmaschine 1 wird die Spülflotte und/oder das Frischwasser F mit Hilfe einer nicht gezeigten Umwälzpumpe gefördert und dem Sprüharm 16 zugeführt. Über den Ausleger 17 wird die Spülflotte und/oder das Frischwasser F dem Sprüharmsatelliten 18 zugeführt. Dieser wird durch die aus nicht gezeigten Sprühdüsen austretende Spülflotte und/oder das Frischwasser F in Rotation um eine Drehachse 55 versetzt. Die Drehachse 55 ist um einen Abstand b von der Drehachse 26 beabstandet und parallel zu dieser angeordnet. Der Sprüharm 16 selbst wird mit Hilfe der Antriebseinrichtung 31 in Rotation um die Drehachse 26 versetzt. Die Drehzahl des Auslegers 17 kann dabei beliebig festgelegt werden. Die Drehzahl des Auslegers 17 kann sich auch während eines Spülprogramms ändern. Der Ausleger 17 kann auch in einer vorgewählten Position verharren, so dass eine Intensivspülzone verwirklicht werden kann, die mit Hilfe des Sprüharmsatelliten 18 mit Spülflotte und/oder Frischwasser F beaufschlagt wird ohne, dass sich der Ausleger 17 dreht.

Es kann somit ein kompaktes, schmutzunempfindliches und robustes Design der Getriebebox 39 als Vormontagegruppe erzielt werden. Die von der Umwälzpumpe zu dem Sprüharm 16 fließenden Spülflotte und/oder das Frischwasser F erfährt im Vergleich zu einem Direktantrieb des Sprüharms 16 keine Umlenkung, und das Lagerrohr 21 kann abweichend zu einem Direktantrieb frei von zum Antrieb nötigen Elementen gehalten werden. Beides bietet hydraulische Vorteile gegenüber einem Direktantrieb. Unter einem "Direktantrieb" ist vorliegend ein System zu verstehen bei dem ein Antriebselement, beispielsweise ein Elektromotor, einen Sprüharm direkt und insbesondere ohne zwischengeschaltete Zahnräder oder ein Getriebe antreibt. Durch die Lage der Getriebebox 39 unterhalb des Siebsystems 54 wird diese zumindest vor Grobschmutzpartikeln geschützt. Die Getriebebox 39 kann durch eine gezielte Leckagemenge an Spülflotte und/oder Frischwasser F mit Hilfe der Reinigungsdüse 27 durchspült und gereinigt werden. Ein Blockieren der Zahnräder 40 bis 42 kann hierdurch zuverlässig verhindert werden. Ferner kann die Spülflotte und/oder das Frischwasser F auch der Schmierung und/oder Temperierung der Zahnräder 40 bis 42 dienen.

Obwohl die vorliegende Erfindung anhand von Ausführungsbeispielen beschrieben wurde, ist sie vielfältig modifizierbar.

### Verwendete Bezugszeichen:

- 1: Haushalts-Geschirrspülmaschine
- 2: Spülbehälter
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme
- 13: Spülgutaufnahme
- 14: Spülgutaufnahme
- 15: Sprühvorrichtung
- 16: Sprüharm
- 17: Ausleger
- 18: Sprüharmsatellit
- 19: Arm
- 20: Arm
- 21: Lagerrohr
- 22: Sprüharmverzahnung
- 23: Hohlraum
- 24: Hohlraum
- 25: Hohlraum
- 26: Drehachse
- 27: Reinigungsdüse
- 28: Pumpentopf
- 29: Pumpentopfdom
- 30: Durchbruch
- 31: Antriebseinrichtung
- 32: Antriebselement
- 33: Antriebswelle
- 34: Drehachse
- 35: Basisabschnitt
- 36: Bohrung
- 37: Dichtelement
- 38: Aufnahmeabschnitt
- 39: Getriebebox
- 40: Zahnrad
- 41: Zahnrad
- 42: Zahnrad
- 43: Drehachse
- 44: Drehachse
- 45: Getriebegehäuse
- 46: Gehäuseoberteil
- 47: Gehäuseunterteil
- 48: Schnapphaken
- 49: Aufnahme
- 50: Befestigungsöse
- 51: Befestigungsöse
- 52: Achse
- 53: Achse
- 54: Siebsystem
- 55: Drehachse

- a: Abstand
- A: Auszugsrichtung
- b: Abstand
- E: Einschubrichtung
- F: Spülflotte und/oder Frischwasser
- R: Radialrichtung

## Patentansprüche

1. Haushalts-Geschirrspülmaschine (1) mit einem Spülbehälter (2), einem Sprüharm (16) zum Beaufschlagen von in dem Spülbehälter (2) aufgenommenem Spülgut mit Spülflotte und/oder Frischwasser (F), einer Antriebseinrichtung (31) zum aktiven Antreiben des Sprüharms (16), wobei eine Drehachse (34) einer Antriebswelle (33) der Antriebseinrichtung (31) und eine Drehachse (26) des Sprüharms (16) parallel zueinander und beabstandet voneinander angeordnet sind, und einem Pumpentopf (28), an dem der Sprüharm (16) gelagert ist und an dem die Antriebseinrichtung (31) befestigt ist, wobei der Sprüharm (16) eine Sprüharmverzahnung (22) umfasst, in welche die Antriebseinrichtung (31) zur Drehmomentübertragung formschlüssig eingreift, **dadurch gekennzeichnet** der Pumpentopf (28) einen rohrförmigen Pumpentopfdom (29) umfasst, in oder an welchem der Sprüharm (16) drehbar gelagert ist, und wobei der Pumpentopfdom (29) einen radialen Durchbruch (30) aufweist, durch welchen hindurch die Antriebseinrichtung (31) zur Drehmomentübertragung formschlüssig in die Sprüharmverzahnung (22) eingreift.

2. Haushalts-Geschirrspülmaschine nach Anspruch 1, **dadurch gekennzeichnet, dass** der Sprüharm (16) einen Ausleger (17), der mit Hilfe der Antriebseinrichtung (31) aktiv angetrieben ist, und einen drehbar an dem Ausleger (17) gelagerten Sprüharmsatelliten (18) umfasst, der mit Hilfe der Spülflotte und/oder des Frischwassers (F) rückstoßangetrieben ist.

3. Haushalts-Geschirrspülmaschine nach Anspruch 1 oder 2, **dadurch gekennzeichnet, dass** die Antriebseinrichtung (31) eine Getriebebox (39) zur Drehmomentübertragung von der Antriebswelle (33) auf den Sprüharm (16) umfasst.

4. Haushalts-Geschirrspülmaschine nach Anspruch 3, **dadurch gekennzeichnet, dass** die Getriebebox (39) geradverzahnte oder schrägverzahnte Zahnräder (40 - 42), ein Kegelradgetriebe, einen Riementrieb oder einen Kettentrieb umfasst.

5. Haushalts-Geschirrspülmaschine nach Anspruch 4, **dadurch gekennzeichnet, dass** die Getriebebox (39) mehrere Zahnräder (40 - 42) umfasst, welche einen Abstand (a) zwischen der Antriebswelle (33) und dem Sprüharm (16) überbrücken.

6. Haushalts-Geschirrspülmaschine nach Anspruch 3 oder 4, **dadurch gekennzeichnet, dass** die Getriebebox (39) ein Getriebegehäuse (45) umfasst, in welchem die Zahnräder (40 - 42) aufgenommen sind.

7. Haushalts-Geschirrspülmaschine nach Anspruch 6, **dadurch gekennzeichnet, dass** die Zahnräder (40 - 42) drehbar in dem Getriebegehäuse (45) gelagert sind.

8. Haushalts-Geschirrspülmaschine nach Anspruch 6 oder 7, **dadurch gekennzeichnet, dass** das Getriebegehäuse (45) ein Gehäuseoberteil (46) und ein Gehäuseunterteil (47) umfasst, wobei das Gehäuseoberteil (46) formschlüssig mit dem Gehäuseunterteil (47) verbunden ist.

9. Haushalts-Geschirrspülmaschine nach einem der Ansprüche 6 - 8, **dadurch gekennzeichnet, dass** das Getriebegehäuse (45) fluiddurchlässig ist.

10. Haushalts-Geschirrspülmaschine nach einem der Ansprüche 3 - 9, ferner umfassend ein Siebsystem (54), unter welchem die Getriebebox (39) angeordnet ist.

11. Haushalts-Geschirrspülmaschine nach einem der Ansprüche 1 - 10, **dadurch gekennzeichnet, dass** der Sprüharm (16) zumindest eine Reinigungsdüse (27) zum Reinigen der Antriebseinrichtung (31) umfasst, wobei die Reinigungsdüse (27) durch die Sprüharmverzahnung (22) hindurchgeführt ist.

12. Haushalts-Geschirrspülmaschine nach Anspruch 11, **dadurch gekennzeichnet, dass** die Reinigungsdüse (27) senkrecht zu der Drehachse (26) des Sprüharms (16) orientiert ist.

## Claims

1. Household dishwasher (1) having a washing container (2), a spray arm (16) for applying washing liquor and/or fresh water (F) to a dishwasher load that is held in the washing container (2), a drive entity (31) for actively driving the spray arm (16), wherein an axis of rotation (34) of a drive shaft (33) of the drive entity (31) and an axis of rotation (26) of the spray arm (16) are arranged parallel to each other and at a distance from each other, and a sump (28) on which the spray arm (16) is mounted and to which the drive entity (31) is fastened, wherein the spray arm (16) comprises a spray arm toothed gear (22) into which the drive entity (31) positively engages for the purpose of transferring rotational moment, **characterised in that** the sump (28) comprises a tubular sump dome (29), in or on which the spray arm (16) is rotatably mounted, and wherein the sump dome (29) has a radial aperture (30) via which the drive entity (31) positively engages into the spray arm toothed gear (22) for the purpose of transferring rotational moment.

2. Household dishwasher according to claim 1, **characterised in that** the spray arm (16) comprises an extension piece (17) which is actively driven by means of the drive entity (31), and a spray arm satellite (18) which is rotatably mounted on the extension piece (17) and is reactively driven by the washing liquor and/or the fresh water (F).

3. Household dishwasher according to claim 1 or 2, **characterised in that** the drive entity (31) comprises a gearbox (39) for transferring rotational moment from the drive shaft (33) to the spray arm (16).

4. Household dishwasher according to claim 3, **characterised in that** the gearbox (39) comprises straight-cut or helical cog-wheels (40 - 42), a bevel gear, a belt drive or a chain drive.

5. Household dishwasher according to claim 4, **characterised in that** the gearbox (39) comprises a plurality of cog-wheels (40 - 42), which bridge a distance (a) between the drive shaft (33) and the spray arm (16).

6. Household dishwasher according to claim 3 or 4, **characterised in that** the gearbox (39) comprises a transmission housing (45) in which the cog-wheels (40 - 42) are held.

7. Household dishwasher according to claim 6, **characterised in that** the cog-wheels (40 - 42) are rotatably mounted in the transmission housing (45).

8. Household dishwasher according to claim 6 or 7, **characterised in that** the transmission housing (45) comprises an upper housing part (46) and a lower housing part (47), wherein the upper housing part (46) is positively connected to the lower housing part (47).

9. Household dishwasher according to one of claims 6 to 8, **characterised in that** the transmission housing (45) is fluid-permeable.

10. Household dishwasher according to one of claims 3 to 9, further comprising a filter system (54) below which the gearbox (39) is arranged.

11. Household dishwasher according to one of claims 1 to 10, **characterised in that** the spray arm (16) comprises at least one cleaning nozzle (27) for cleaning the drive entity (31), wherein the cleaning nozzle (27) passes through the spray arm toothed gear (22).

12. Household dishwasher according to claim 11, **characterised in that** the cleaning nozzle (27) is arranged perpendicular to the axis of rotation (26) of the spray arm (16).

## Revendications

1. Lave-vaisselle domestique (1) comprenant une cuve de lavage (2), un bras de pulvérisation (16) pour appliquer de l'eau de lavage et/ou de l'eau douce (F) sur des articles à laver reçus dans la cuve de lavage (2), un moyen d'entraînement (31) pour entraîner activement le bras de pulvérisation (16),
dans lequel un axe de rotation (34) d'un arbre d'entraînement (33) du moyen d'entraînement (31) et un axe de rotation (26) du bras de pulvérisation (16) sont disposés parallèlement l'un à l'autre et à distance l'un de l'autre, et
un puits de pompe (28), sur lequel le bras de pulvérisation (16) est monté et auquel le moyen d'entraînement (31) est fixé,
dans lequel le bras de pulvérisation (16) comprend une denture de bras de pulvérisation (22), dans laquelle le moyen d'entraînement (31) s'engrène par complémentarité de forme pour une transmission du couple,
**caractérisé en ce que** le puits de pompe (28) comprend un dôme de puits de pompe tubulaire (29), dans ou sur lequel le bras de pulvérisation (16) est monté à rotation, et
dans lequel le dôme de puits de pompe (29) comprend une percée radiale (30), à travers laquelle le moyen d'entraînement (31) s'engrène par complémentarité de forme dans la denture de bras de pulvérisation (22) pour une transmission du couple de rotation.

2. Lave-vaisselle domestique selon la revendication 1, **caractérisé en ce que** le bras de pulvérisation (16) comprend un bras d'extension (17), qui est entraîné activement à l'aide du moyen d'entraînement (31), et un satellite de bras de pulvérisation (18) monté à rotation sur le bras d'extension (17), qui est entraîné par contrecoup à l'aide de l'eau de lavage et/ou de l'eau douce (F).

3. Lave-vaisselle domestique selon la revendication 1 ou 2, **caractérisé en ce que** le moyen d'entraînement (31) comprend une boîte d'engrenage (39) destinée à transmettre le couple de rotation de l'arbre d'entraînement (33) au bras de pulvérisation (16).

4. Lave-vaisselle domestique selon la revendication 3, **caractérisé en ce que** la boîte d'engrenage (39) comprend des roues dentées à denture droite ou à denture hélicoïdale (40-42), un engrenage à pignon conique, une transmission à courroie ou une transmission par chaîne.

5. Lave-vaisselle domestique selon la revendication 4, **caractérisé en ce que** la boîte d'engrenage (39) comprend plusieurs roues dentées (40-42), qui franchissent une distance (a) entre l'arbre d'entraînement (33) et le bras de pulvérisation (16).

6. Lave-vaisselle domestique selon la revendication 3 ou 4, **caractérisé en ce que** la boîte d'engrenage (39) comprend un carter d'engrenage (45), dans lequel les roues dentées (40-42) sont logées.

7. Lave-vaisselle domestique selon la revendication 6, **caractérisé en ce que** les roues dentées (40-42) sont montées à rotation dans le carter d'engrenage (45).

8. Lave-vaisselle domestique selon la revendication 6 ou 7, **caractérisé en ce que** le carter d'engrenage (45) comprend une partie supérieure de carter (46) et une partie inférieure de carter (47), dans lequel la partie supérieure de carter (46) est assemblée par complémentarité de forme à la partie inférieure de carter (47).

9. Lave-vaisselle domestique selon l'une des revendications 6 à 8, **caractérisé en ce que** le carter d'engrenage (45) est perméable aux fluides.

10. Lave-vaisselle domestique selon l'une des revendication 3 à 9, comprenant en outre un système de tamis (54), sous lequel la boîte d'engrenage (39) est disposée.

11. Lave-vaisselle domestique selon l'une des revendications 1 à 10, **caractérisé en ce que** le bras de pulvérisation (16) comprend au moins une buse de nettoyage (27) pour nettoyer le moyen d'entraînement (31), dans lequel la buse de nettoyage (27) est guidée à travers la denture du bras de pulvérisation (22).

12. Lave-vaisselle domestique selon la revendication 11, **caractérisé en ce que** la buse de nettoyage (27) est disposée perpendiculairement à l'axe de rotation (26) du bras de pulvérisation (16).
